Europäisches Patentamt

European Patent Office

Office européen des brevets

(11) Numéro de publication: **0 432 008 A1**

# (12) DEMANDE DE BREVET EUROPEEN

(21) Numéro de dépôt: 90403326.3

(51) Int. Cl.⁵: **G06F 15/80**

(22) Date de dépôt: 23.11.90

Le titre de l'invention a été modifié (Directives relatives à l'examen pratiqué à l'OEB, A-III, 7.3)

(30) Priorité: 01.12.89 FR 8915875

(43) Date de publication de la demande:
**12.06.91 Bulletin 91/24**

(84) Etats contractants désignés:
**DE GB**

(71) Demandeur: **THOMSON-CSF**
**51, Esplanade du Général de Gaulle**

**F-92800 Puteaux(FR)**

(72) Inventeur: **de Chambost, Emmanuel**
**THOMSON-CSF SCPI Cédex 67**
**F-92045 Paris la Défense(FR)**
Inventeur: **Sonrier, Michel**
**THOMSON-CSF SCPI Cédex 67**
**F-92045 Paris la Défense(FR)**

(74) Mandataire: **Chaverneff, Vladimir et al**
**THOMSON-CSF SCPI**
**F-92045 PARIS LA DEFENSE CEDEX 67(FR)**

(54) **Réseau neuronal électronique et procédé d'apprentissage.**

(57) La procédé d'apprentissage de réseau neuronal de l'invention consiste à effectuer la correction des coefficients synaptiques à l'aide de circuits neuronaux supplémentaires (CNE1 à CNE3) seulement lorsque toute la base d'apprentissage a été présentée à l'entrée du réseau et que tous les vecteurs de sortie ont été calculés par ce réseau.

FIG.4

La présente invention se rapporte à un réseau neuronal à circuits neuronaux électroniques à apprentissage de coefficients, et à un procédé d'apprentissage.

Les réseaux neuronaux désignent dans le domaine de l'intelligence artificielle des techniques, inspirées

EP 0 432 008 A1

du fonctionnement du cerveau, pour résoudre des problèmes de reconnaissance, classification ou optimisation, et dans le domaine des circuits électroniques, un certain type de circuits capables de réaliser des transformations sur des vecteurs ayant un nombre élevé de composantes. Une bonne description d'ensemble de ces techniques est faite dans l'article de R. LIPPMANN paru dans "IEEE ASSP Magazine" d'avril 1987 page 4 et suivantes.

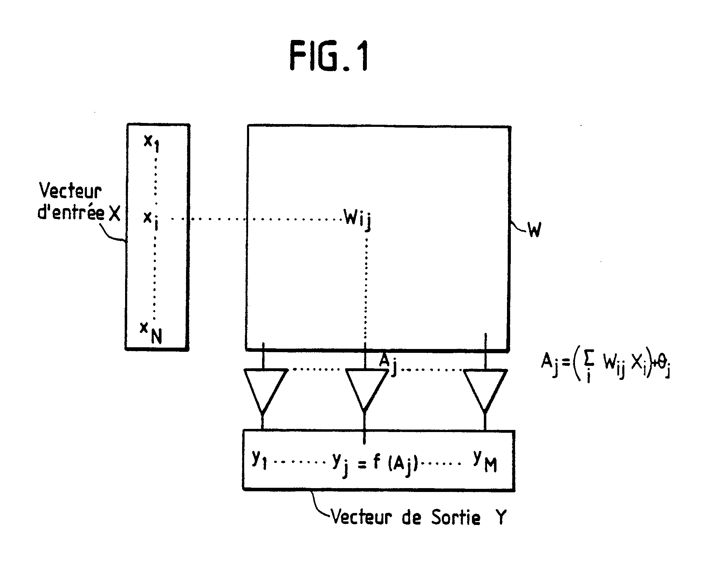

On a représenté en figure 1 le schéma fonctionnel d'un circuit neuronal électronique (appelé par la suite CNE).

Un CNE est un circuit électronique programmé avec une matrice W de NxM "coefficients synaptiques" ou "poids synaptiques" WiJ et avec M "seuils" $\Theta$ j qui opère un vecteur d'entrée X à n composantes (X1...Xi...Xn) et génère un vecteur de sortie Y à M composantes (Y1...Yi...YM). Le vecteur de sortie dépend du vecteur d'entrée par la relation:

$$A_j = ( \sum_{i=1}^{N} W_{ij}.X_i) + \Theta j \qquad (1)$$

$$Y_j = f(A_j)$$

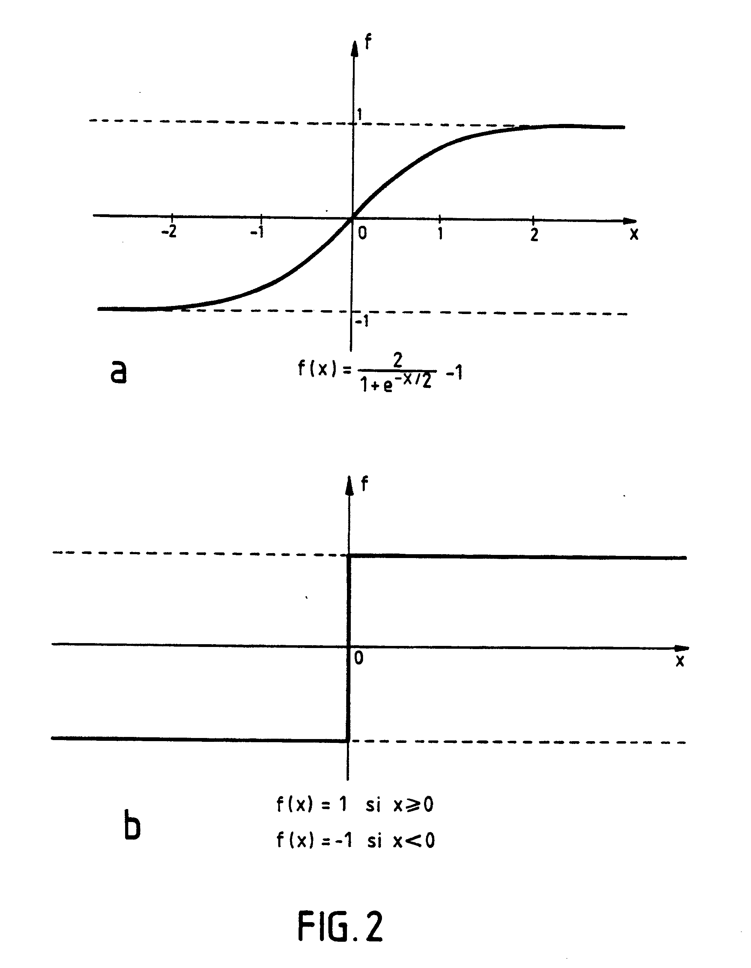

La figure 2 illustre des formes possibles pour la fonction f définie par les règles suivantes:
- f est une fonction impaire
- f est monotone croissante

$$- f ( \infty) = 1 ; f (- \infty ) = -1$$

$$\text{en (a), on a la fonction } f(x) = \frac{2}{1+e^{-x/2}} - 1$$

et en (b), un échelon tel que f (x) = 1 si x $\geq$ 0
et f (x) = -1 si x $\leq$ 0

L'intérêt de ces circuits est leur puissance de calcul qui provient du fait qu'en mettant à profit la structure matricielle de la relation (1), on peut effectuer beaucoup d'opérations élémentaires en parallèle, c'est-à-dire dans le même temps à l'intérieur du même circuit. Parmi les CNE on distingue les CNE numériques, les CNE analogiques, et parmi ces derniers, on distingue les CNE analogiques à poids binaires qui en sont un cas particulier.

Dans la suite du texte, on appelle réseaux neuronaux une série de un ou plusieurs CNE, telle que le vecteur de sortie de l'un soit le vecteur d'entrée du CNE suivant. On parle de réseaux neuronaux à une couche, à deux couches et.... Les fonctions de reconnaissance ou de classification que peuvent accomplir des réseaux neuronaux dépendent du nombre de couches (voir LIPPMANN). Ci-dessous sont décrits différents types de CNE dans l'art existant et ensuite le moyen connu pour programmer un réseau neuronal (c'est-à-dire déterminer les coefficients synaptiques) pour résoudre un problème donné.

La grandeur A, qui a été introduite dans la relation (1) peut être calculée dans le CNE par des techniques numériques classiques, et dans ces conditions rien ne s'oppose à ce que cette grandeur soit disponible à la sortie du circuit. C'est la définition adoptée ici : on parle de CNE numérique si la grandeur Aj de la relation (1), illustrée figure 1 est disponible sous forme numérique en sortie du circuit. Dans cette classe de CNE, on peut ranger par exemple les circuits proposés par M. DURANTON et J.A. SIRAT dans "Proceedings of ISCNN", Washington, 1989.

L'intérêt de réaliser des CNE analogiques est que si on veut mettre en oeuvre la fonction f illustrée sur la figure 2(b), la composante de sortie Yj sera binaire (-1 ou +1) et il est alors inutile de calculer Aj avec une résolution importante. En intégrant la fonction f au dispositif, il est possible de réaliser la fonction de façon beaucoup plus compacte et donc de traiter des vecteurs de dimension plus grande. La contrepartie est que seule f (Aj) sera disponible en sortie et non Aj. Une autre façon de simplifier la mise en oeuvre matérielle de la relation (1) est de n'accepter en composantes d'entrée X1 que des valeurs binaires (-1 ou 1) que l'on peut coder sur un seul bit. Pour résumer, voici la définition donnée dans cette description du CNE analogique :

- Les composantes du vecteur d'entrée valent -1 ou +1; elles sont codées sur un seul bit.
- Les composantes du vecteur de sortie valent -1 ou +1; elles sont codées sur un seul bit; la fonction f est celle qui est illustrée sur la figure 2(b).
- La grandeur Aj n'est pas disponible en sortie du circuit.

Parmi les circuits répondant à cette définition, on peut citer l'article de R.E. HOWARD et autres, paru dans "IEEE Transaction on electron devices", vol. ED-34, n° 7, Juillet 1987 page 1553 et suivantes, ainsi que l'article de J.M. VIGNOLLE, E. DE CHAMBOST et F. MICHERON paru dans "ECAPD-1 ISAF" de 1988.

Les CNE analogiques à poids binaires ne sont qu'une simple restriction des CNE analogiques : les coefficients synaptiques Wij sont égaux à 1 ou -1 et peuvent donc être codés sur un seul bit. L'intérêt de tels circuits est qu'un nombre encore plus grand de coefficients peut être stocké sur le circuit et donc que ces CNE peuvent opérer des vecteurs d'entrée de dimension encore plus grande. Parmi des circuits de ce type, on peut citer l'article de H.P. GRAF publié dans "Proceedings of n'Euro" de 1988. L'article de E. DE CHAMBOST publié dans cette même revue a montré que de tels CNE, malgré les contraintes apportées sur les coefficients, gardaient des propriétés très intéressantes pour le calcul neuronal.

Les méthodes d'apprentissage qui sont connues ne se rapportent pas en général à un type de circuit particulier mais à un modèle mathématique, celui de la relation (1), qui est le même que celui des CNE, dans le cas le plus général. C'est pourquoi on emploie quand même le terme de CNE.

On va maintenant expliquer ce que l'on entend par "apprentissage" d'un réseau neuronal.

Soit une collection de K vecteurs d'entrée $X^\mu$ à N composantes. On veut déterminer une configuration de CNE qui, pour chaque vecteur d'entrée $X^\mu$ génère un vecteur de sortie $ZD^\mu$ à P composantes. L'ensemble des k vecteurs d'entrée associés à K vecteurs de sortie est appelé base d'apprentissage. On appelle apprentissage tout procédé consistant à déterminer les coefficients synaptiques des CNE qui, mis en série, génèreront, pour l'ensemble de la base d'apprentissage, des vecteurs de sortie les plus proches possible des vecteurs désirés.

On parle souvent, dans la littérature de phase d'apprentissage et de phase opératoire. La phase d'apprentissage vise à déterminer les coefficients synaptiques, et une fois ceux-ci déterminés, au cours de la phase opératoire, on présente des vecteurs à l'entrée du réseau afin que le réseau calcule les vecteurs de sortie. C'est pour cette phase opératoire que les CNE précités sont réalisés.

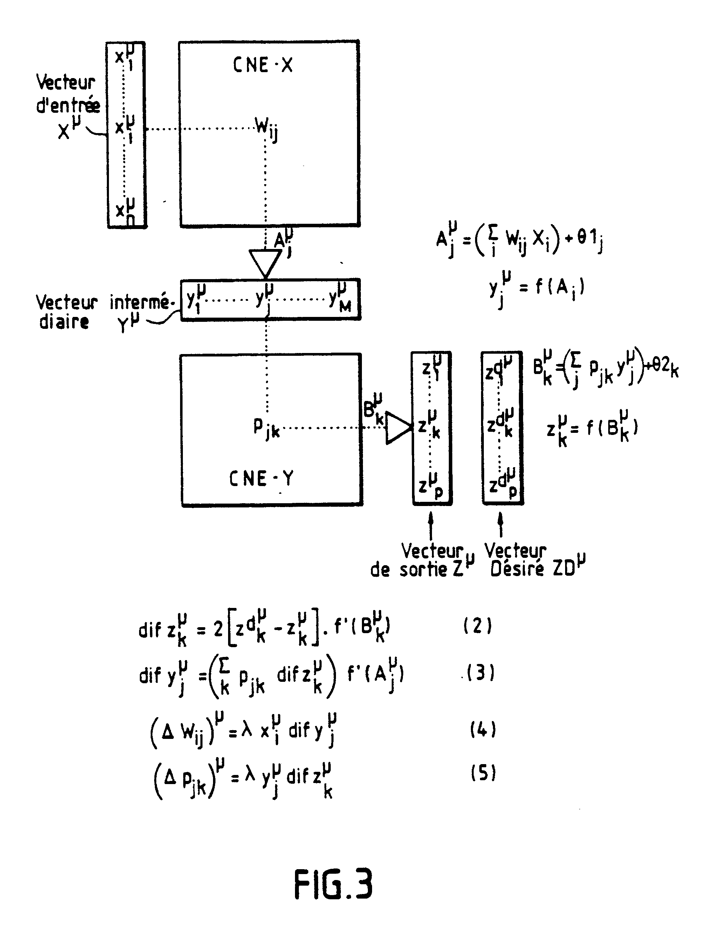

On va maintenant décrire une méthode d'apprentissage connue sous le nom d'algorithme de rétropropagation. Cet algorithme est bien décrit dans l'article précité de LIPPMANN. Il est résumé succinctement ici. Le choix de la structure du réseau neuronal doit précéder la mise en oeuvre de l'algorithme et n'est pas discutée ici. On suppose donc qu'on a déterminé le nombre des CNE mis en série, et pour chacun d'entre eux, la dimension des vecteurs d'entrée et la dimension des vecteurs de sortie. L'algorithme de rétropropagation vise à déterminer les coefficients synaptiques des CNE mis en série. Pour décrire l'algorithme, on a pris comme exemple un réseau à deux couches dont le premier CNE, appelé CNE-X, accepte N entrées et génère M sorties, et le 2ème CNE, appelé CNE-Y, accepte M entrées et génère P sorties. Ceci est illustré figure 3.

1° / Initialisation : les coefficients des deux CNE sont initialisés aléatoirement.

2° / On présente le vecteur $X^\mu$ de la base d'apprentissage à l'entrée de CNE-X ; "$\mu$" désigne le rang du vecteur dans la base d'apprentissage.

3° / Propagation directe : un vecteur intermédiaire $Y^\mu$ est généré par CNE-X ; ce vecteur intermédiaire est présenté à l'entrée de CNE-Y qui génère un vecteur de sortie $Z^\mu$.

4° / Rétropropagation : un vecteur $DIFZ^\mu$ est calculé selon la relation (2) ci-dessous : il est significatif de la différence entre le vecteur de sortie désiré $ZD^\mu$ et le vecteur de sortie $Z^\mu$. Un vecteur $DIFY^\mu$ est calculé selon la relation (3) ci-dessous en opérant la matrice inverse de la matrice des coefficients de CNE-Y sur le vecteur $DIFZ^\mu$.

$$difz_k{}^\mu = 2 * (zd_k{}^\mu - z_k{}^\mu) * f'(B_k{}^\mu) \quad (2)$$
$$dify_k{}^\mu = (\overset{S}{k} P_{jk} * difz_k{}^\mu) * f'(A_j{}^\mu) \quad (3)$$

5° / Calcul des corrections à appliquer aux coefficients. Un incrément est calculé pour chacun des coefficients synaptiques selon les relations (4) et (5) de la figure 3. Ces relations sont parfois connues dans la littérature sous le nom de loi de Hebb.

$$(\delta W_{ij})^\mu = \alpha * X_i{}^\mu * dify_j{}^\mu \quad (4)$$
$$(\delta P_{jk})^\mu = \alpha * X_j{}^\mu * difz_k{}^\mu \quad (5)$$

6°/ Application des corrections aux coefficients : les incréments précédemment calculés sont rajoutés aux coefficients.

7°/ Retour à l'étape n° 2 avec un nouveau vecteur de la base d'apprentissage.

Il existe de nombreuses variantes de l'algorithme de rétropropagation qu'on ne peut pas toutes discuter ici. C'est dire que les relations (2) (3) (4) et (5) peuvent être modifiées sans que pour autant l'esprit de la méthode soit dénaturé. C'est une méthode adaptative : il importe donc avant tout qu'une identité entre un vecteur de sortie et un vecteur désiré conduise à une correction nulle sur les coefficients et que s'il n'y a pas d'identité, les corrections apportées tendent à rapprocher les sorties réelles des sorties désirées.

Un des gros problèmes de cette méthode d'apprentissage est que le nombre de cycles d'apprentissage nécessaires pour faire converger l'ensemble des coefficients synaptiques vers une configuration stable peut être très grand et que par conséquent le temps de calcul peut devenir prohibitif. On appelle cycle d'apprentissage les 7 étapes décrites ci-dessus répétées K fois, c'est-à-dire qu'au cours d'un cycle d'apprentissage chaque vecteur de la base d'apprentissage est présenté une fois à l'entrée du réseau. On peut établir le compte du nombre de multiplications à effectuer au cours d'un cycle :

Etape 3)   : K*M*N + K*M*P pour la relation (1)

Etape 4)   : K*P pour la relation (2) et K*M*P + K*K*M pour la relation (3)

Etape 5)   : K*M*N pour la relation (4) et K*M*P pour la relation (5)

La présente invention a pour objet un réseau neuronal comportant des circuits neuronaux électroniques permettant d'accélérer sensiblement la procédure d'apprentissage, ainsi qu'un procédé d'apprentissage rapide.

Selon la présente invention, le réseau neuronal, du type à circuits neuronaux électroniques réalisant des transformations sur des vecteurs, comporte des circuits neuronaux électroniques supplémentaires dans son circuit de calcul de corrections de coefficients synaptiques. Pour un réseau comportant n CNE "directs", l'invention prévoit de disposer (n-1) CNE supplémentaires pour la rétropropagation et au plus n CNE supplémentaires pour le calcul des corrections des coefficients synaptiques.

Le procédé conforme à l'invention consiste à n'effectuer la correction des coefficients synaptiques à l'aide de circuits neuronaux électroniques que lorsque toute la base d'apprentissage a été présentée à l'entrée du réseau et que tous les vecteurs de sortie aient été calculés par le réseau.

Ainsi, selon le procédé de l'invention, on n'effectue de correction sur les coefficients qu'une fois que tous les vecteurs de la base d'apprentissage aient été opérés par CNE-X et CNE-Y. A ce moment-là, les relations (4) et (5) ci-dessus sont simplement transformées en :

$$( \delta\ W_{ij}) = \sum_{\mu=1}^{K} [\alpha * x_i^{\mu} * \mathrm{dify}_j \mu] \qquad (4\mathrm{bis})$$

$$( \delta\ P_{jk}) = \sum_{\mu=1}^{K} [\alpha * x_j^{\mu} * \mathrm{difz}_k^{\mu}] \qquad (5\mathrm{bis})$$

Selon un autre aspect du procédé de l'invention, un réseau neuronal comportant n CNE "directs" dans le réseau proprement dit, ce procédé étant mis en oeuvre, pour l'apprentissage des coefficients synaptiques à l'aide de (n-1) CNE supplémentaires pour la rétropropagation et (n) CNE supplémentaires pour le calcul des corrections des coefficients, est caractérisé par le fait que le $i^{\mathrm{ème}}$ CNE de rétropropagation est programmé avec la matrice de coefficients transposée de la matrice de coefficients du $(i+1)^{\mathrm{ème}}$ CNE "direct", et que le $i^{\mathrm{ème}}$ CNE de correction est programmé avec les transformés des vecteurs de la base d'apprentissage présents à l'entrée du $i^{\mathrm{ème}}$ CNE "direct".

La présente invention sera mieux comprise à la lecture de la description détaillée d'un mode de réalisation, pris à titre d'exemple non limitatif et illustré par le dessin annexé, sur lequel :

- les figure 1 à 3, citées ci-dessus pour expliquer l'art antérieur, représentent respectivement le schéma simplifié d'un CNE, deux fonctions différentes pouvant être mises en oeuvre par des CNE, et un bloc-diagramme illustrant le processus de rétropropagation,

- la figure 4 est un bloc-diagramme des CNE utilisés dans le réseau neuronal conforme à l'invention,

- la figure 5 est un organigramme expliquant le fonctionnement du réseau neuronal conforme à l'invention, utilisant des CNE numériques,
- la figure 6 est un bloc-diagramme d'un réseau neuronal conforme à l'invention, et utilisant des CNE analogiques,
- la figure 7 est un organigramme illustrant le fonotionnement du réseau de la figure 6,
- les figures 8A et 8B sont des organigrammes illustrant le fonctionnement de variantes avantageuses du réseau neuronal conforme à l'invention et utilisant des réseaux analogiques à coefficients binaires,
- la figure 9 est un bloc-diagramme de circuits pouvant être utilisés dans le réseau neuronal conforme à l'invention, et
- la figure 10 est un bloc-diagramme de variantes de CNE pouvant être utilisés dans le réseau neuronal conforme à l'invention.

L'invention est décrite ci-dessous d'abord dans le cas général, puis de façon détaillée, à l'aide des différents CNE connus en sol et décrits ci-dessus.

D'abord, on part de l'exemple de la figure 3 pour l'exemple d'apprentissage de réseau à deux couches. Pour mettre en oeuvre l'invention, il faut combiner ce réseau connu avec trois CNE supplémentaires tels que les CNE référencés CNE1 à CNE3 de la figure 3.

Le premier circuit supplémentaire, CNE1, est celui de rétropropagation. Son vecteur d'entrée est $DIFZ^{\mu}$ (à P composantes : $difz_1^{\mu}$ ...$difz_P^{\mu}$ et son vecteur de sortie est $DIFY\mu$ ($dify_1^{\mu}$ ...$dify_M^{\mu}$ ). Les deux autres CNE supplémentaires, CNE2 et CNE3 sont les CNE de correction. CNE2 a pour vecteur d'entrée $DIFY_j$ ($dify_j^1$ ...$dify_j^k$ ) et pour vecteur de sortie $\Delta W_j$ ($\Delta W_{1j}$...$\Delta W_{Nj}$). CNE3 a pour vecteur d'entrée $DIFZ_K$ ($difz_k^1$ ...$difz_k^k$ ) et pour vecteur de sortie $\Delta P_k$ ($\Delta p_{1k}$...$\Delta p_{Mk}$).

Selon l'invention, l'apprentissage du réseau de la figure 3, combiné avec les circuits CNE1 à CNE3 comprend les étapes suivantes :

1/ Initialisation : les coefficients des 2 CNE (CNE-X et CNE-Y) sont initialisés aléatoirement.

2/3/ Présentation des K vecteurs de la base d'apprentissage. CNE-X et CNE-Y mis en série, génèrent k vecteurs de sortie $Z^{\mu}$. L'utilisation des CNE du réseau de la figure 3 pour réaliser cette opération est évidente pour l'homme de l'art et ne fait pas partie de l'invention.

Le procédé de l'invention permet de corriger les coefficients une fois que l'on dispose en plus des K vecteurs d'entrée et des K vecteurs désirés de la base d'apprentissage, des K vecteurs de sortie réels et des K vecteurs de la couche intermédiaire.

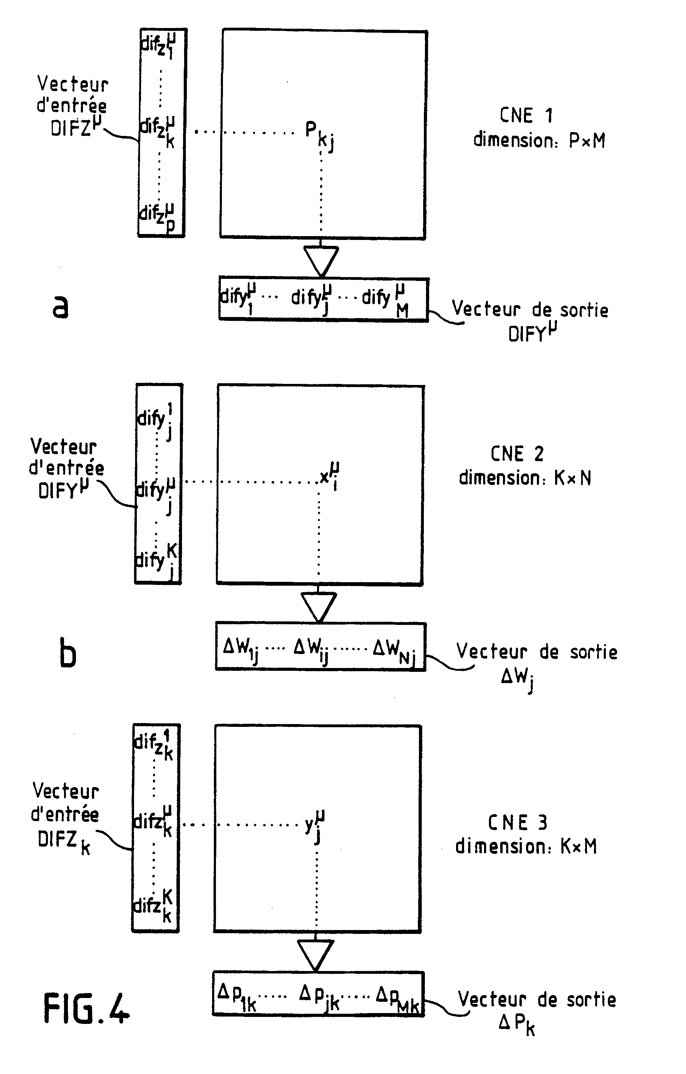

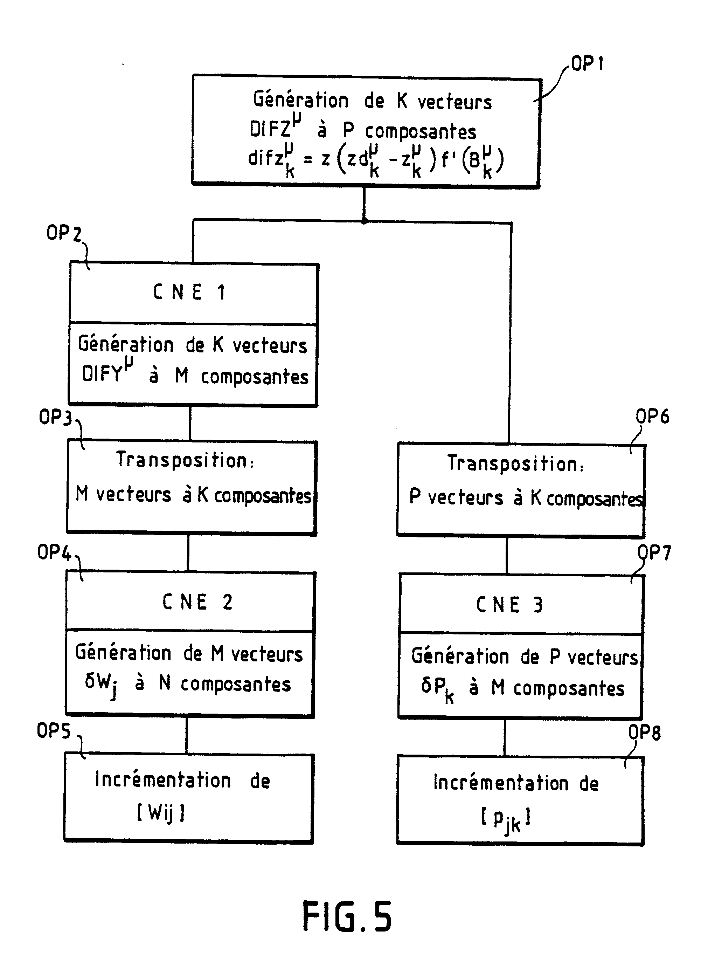

On va maintenant décrire les différentes mises en oeuvre possibles, selon que l'on dispose de CNE numériques, de CNE analogiques ou de CNE analogiques à coefficients binaires. Dans tous les cas, on applique selon l'invention les 3 CNE supplémentaires illustrés en figure 4 et programmés de la façon suivante, en référence à l'organigramme de la figure 5.

4/ Rétropropagation : après le calcul des K vecteurs $DIFZ^{\mu}$ selon la relation (2), utilisation selon l'invention du CNE1 de la figure 4 programmé avec la matrice de coefficients $[P_{jk}]$ transposés de la matrice des coefficients $[P_{kj}]$ de CNE-Y. CNE1 opère sur les K vecteurs $DIFZ^{\mu}$ à P composantes et génère K vecteurs $DIFY^{\mu}$ à M composantes.

5/ Calcul des corrections. Les K vecteurs $DIFY^{\mu}$ à M composantes sont transposés en M vecteurs à K composantes. CNE2 programmé avec les composantes des K vecteurs d'entrée de la base d'apprentissage, opère sur ces M vecteurs et génère M vecteurs à N composantes $\delta W_j$.

Les K vecteurs $DIFZ^{\mu}$ à P composantes sont transposés en P vecteurs à K composantes. CNE3, programmé avec les composantes des K vecteurs d'entrée de la base d'apprentissage, opère sur ces P vecteurs et génère P vecteurs à M composantes $\delta P_K$.

6/ Applications des corrections : les M vecteurs $\delta W_j$ sont ajoutés colonne à colonne à la matrice des coefficients de CNE-X et les P vecteurs $\delta P_K$ sont ajoutés colonne à colonne à la matrice des coefficients de CNE-Y.

La mise en oeuvre de l'apprentissage avec des CNE numériques est dérivée le plus directement possible du principe général de l'invention énoncé ci-dessus. La procédure est mise en oeuvre dans ce cas en huit opérations de base OP1 à OP8 dont trois sont réalisées par des CNE (OP2,OP4,OP7) et deux sont des transpositions de matrice (OP3,OP6).

- OP1 qui consiste en la répétition de K fois la relation (2) ne constitue pas une innovation par rapport à l'art existant.
- OP2 consiste à effectuer K opérations de CNE1 pour réaliser K*M fois la relation (3). La fonction f associée à CNE1 est une fonction linéaire du type $f(x) = \alpha^* x$.

le calcul de $f'(A_j^{\mu})$ est possible au même titre que le calcul de $f(A_j^{\mu})$ et les multiplications par $f'(A_j^{\mu})$ et ce, de façon analogue à ce qui est réalisé par les réseaux neuronaux connus.

5

- OP3 est une opération de transposition qui porte sur une matrice KxM et peut être mise en oeuvre, de façon connue en soi, par une lecture adéquate de la mémoire où sont rangés les vecteurs à transposer.
- OP4 consiste à effectuer M opérations de CNE2 sur les M vecteurs issus de la transposition pour réaliser $K^*M^*N$ fois la relation (4). La fonction f associée à CNE2 est une fonction linéaire du type $f(x) = a^*x$.
- OP5 consiste en $N^*M$ additions, qui remplacent les $N^*M^*K$ additions effectuées selon l'art antérieur.
- OP6 est une opération de transposition qui porte sur une matrice KxP qui peut être mise en oeuvre, de façon connue en sol, par une lecture adéquate de la mémoire où sont rangés les vecteurs à transposer.
- OP7 consiste à effectuer P opérations de CNE3 sur les P vecteurs issus de la transposition pour réaliser $K^*M^*P$ fois la relation (5). La fonction f associée à CNE3 est une fonction linéaire du type $f(x) = a^*x$.
- OP8 consiste en $M^*P$ additions, qui remplacent les $M^*P^*K$ additions effectuées selon l'art antérieur.

L'emploi de CNE analogiques entraîne des modifications par rapport à la procédure qui vient d'être décrite pour des CNE numériques, modifications qui sont la conséquence des particularités des CNE analogiques :

- La relation (2) considérée dans le cas où $zd_k{}^\mu$ et $Z_k\mu$ peuvent prendre des valeurs -1 et +1, donne la possibilité à $difz_k{}^\mu$ de prendre trois valeurs différentes possibles, ce qui est incompatible avec le format d'entrée des CNE analogiques.
- Les grandeurs $f'(A_j)$ et $f'(B_k)$ ne sont pas disponibles.

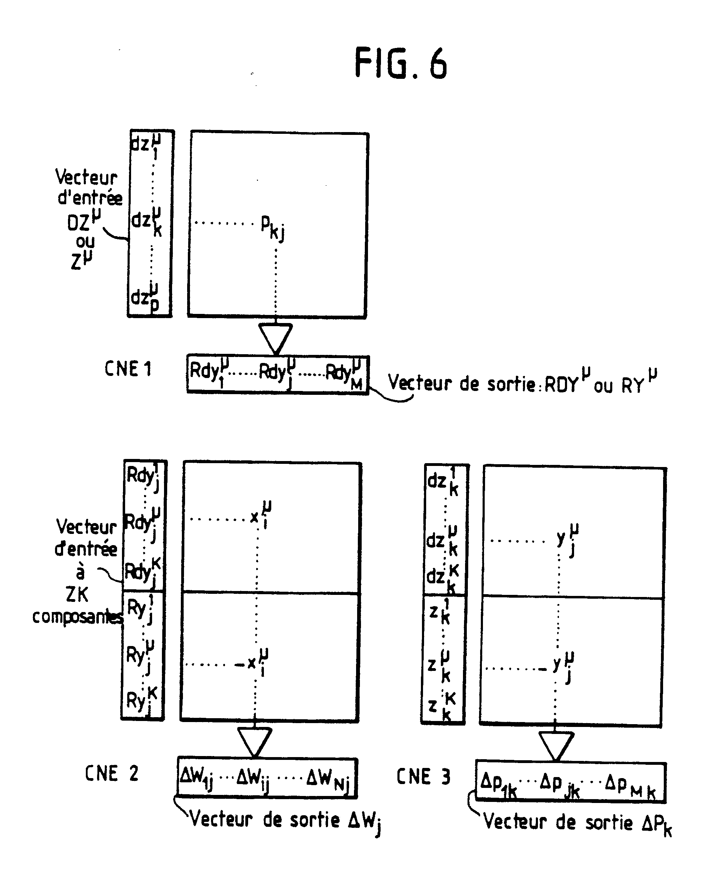

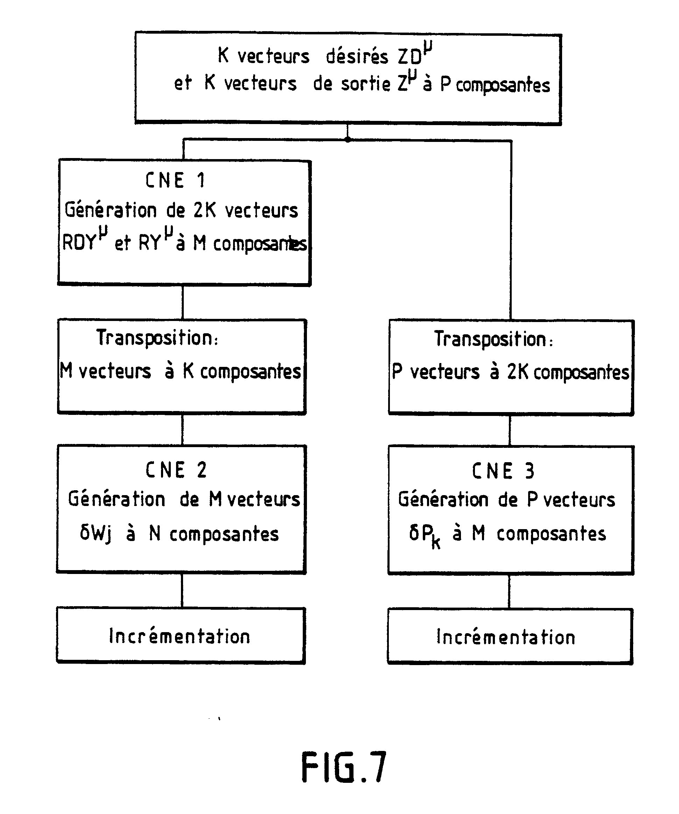

s modifications de procédures qui en découlent sont les suivantes et sont illustrées sur la figure 6, ces procédures étant résumées sur l'organigramme de la figure 7. Sur cette figure 6, on a simplement représenté les circuits CNE1 à CNE3 avec leurs vecteurs d'entrée et de sortie. CNE1 reçoit en entrée $DZ^\mu$ ou $Z^\mu$ ($dz_1^\mu$ à $dz_p^\mu$) et son vecteur de sortie est référencé $RDY^\mu$ ou $RY^\mu$. CNE2 reçoit un vecteur d'entrée à $2^*K$ composantes ($Rdy_j$ à $Rdy_j$) et ($Ry_j$ a $Ry_j$) son vecteur de sortie étant $\Delta W_j$ ($\Delta W_{ij}$ à $\Delta WN_j$). CNE3 reçoit également un vecteur d'entrée à deux composantes ($dz_k^1$ à $dz_k^k$) et ($z_k^1$ à $Z_k^k$), son vecteur de sortie étant $\Delta P_k$ ($\Delta p_{1k}$ à $\Delta P_{mk}$).

- La relation (2) n'est pas calculée, mais les K vecteurs $DZ^\mu$ et $Z^\mu$ sont "rétropropagés" par CNE1 pour donner un ensemble de $2^*K$ vecteurs, $RDY^\mu$ et $RY^\mu$ de dimension M qui sont transposés en M vecteurs de dimension $2^*K$.
- De la même façon, les K vecteurs $DZ^\mu$ et $Z\mu$ de dimension P sont transposés en P vecteurs de dimension $2^*K$.
- Finalement, la différence de la relation (2) est reportée sur CNE2 et CNE3 qui sont programmés en dédoublant la base d'apprentissage ainsi qu'il est montré sur la figure 6.
- A chaque opération d'un CNE, le résultat est binarisé par la fonction f de la figure 2b, ce qui correspond à une perte d'information, mais le grand nombre de données qui peut être manipulé grâce à l'usage des CNE analogiques permet de pallier cet inconvénient.

Avec des réseaux analogiques à coefficients binaires, la conséquence de la particularité des poids binaires se situe au niveau de l'application des corrections aux coefficients : il n'est pas possible d'appliquer un incrément à une valeur binaire. Selon l'invention, deux moyens distincts permettent de surmonter cette difficulté

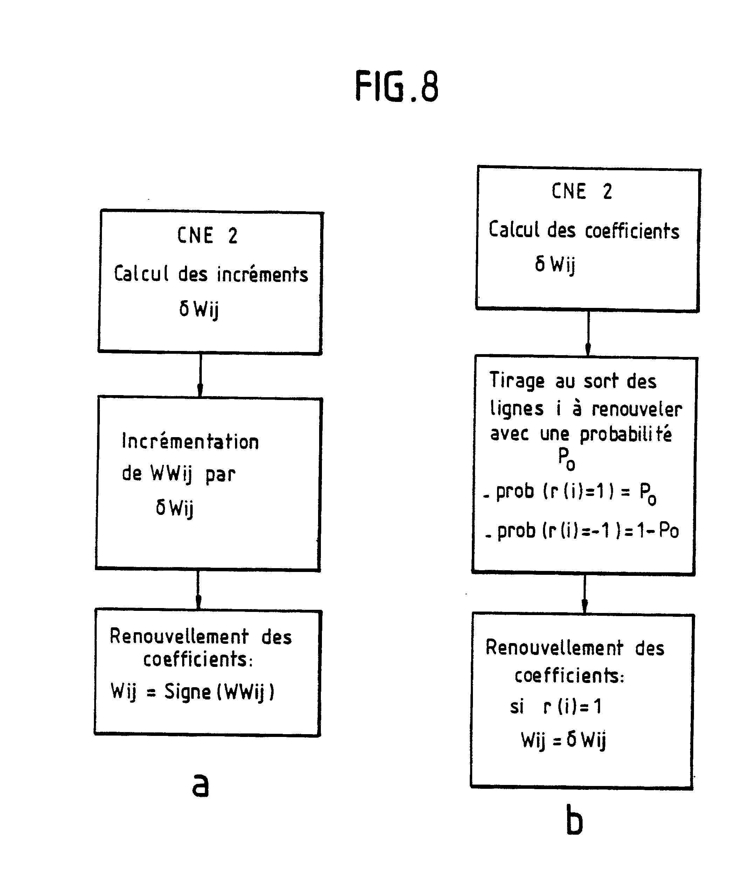

L'incrémentation des matrices $[W_{ij}]$ et $[P_{jk}]$ est réalisée indirectement : selon l'organigramme de la figure 8a, on incrémente d'abord des coefficients entiers, $[WW_{ij}]$ et $[PP_{jk}]$ et on programme ensuite CNE2 et CNE3 avec

$$W_{ij} = +1 \text{ si } WW_{ij} > 0$$
$$-1 \text{ si } WW_{ij} \le 0$$

et

$$P_{ij} = +1 \text{ si } pp_{jk} > 0$$
$$-1 \text{ si } pp_{jk} \le 0$$

Ce dernier procédé a l'avantage de conserver la structure classique de l'algorithme de rétropropagation, mais l'inconvénient de nécessiter des mémoires de grande capacité pour stocker une matrice de coefficients entiers supplémentaire par CNE.

Selon une variante avantageuse de l'invention, il y a un autre moyen de réaliser l'adaptation des coefficients illustrée par la figure 8b. Au lieu d'incrémenter tous les coefficients $W_{ij}$ et $P_{jk}$ de $\delta$ $W_{ij}$ et $\delta$ $P_{jk}$, respectivement, on remplace une partie seulement des coefficients $W_{ij}$ et $P_{jk}$ par $\delta$ $W_{ij}$ et $\delta$ $P_{jk}$ respectivement. La part des coefficients ainsi renouvelée peut varier de quelques % à plus de 50 % selon le problème d'apprentissage considéré.

Une solution particulièrement intéressante illustrée par la figure 8b consiste à tirer au sort à chaque cycle d'apprentissage les lignes qui sont à mettre à jour et à renouveler entièrement des lignes de coefficients $W_i$ ou $P_i$.

Dans le cas général où les composantes des groupes de vecteurs à transposer sont des entiers qui ont chacun leur adresse connue par le processeur, la transposition est réalisée simplement en lisant une matrice d'entiers en lignes selon l'indice i, par exemple, au lieu de la lire en colonnes selon l'indice j.

Lorsque les opérations de transposition à effectuer concernent des vecteurs à composantes binaires et que pour économiser les ressources du système informatique, on réserve un seul bit par composante, un même mot binaire sur un seul ou sur plusieurs octets comprend plusieurs composantes, et la transposition d'un groupe de mots représente une opération assez longue à réaliser puisque pour chaque composante, il faut réaliser une opération dite de masquage pour extraire le bit associé à la composante considérée, et qu'ensuite, il faut regrouper plusieurs valeurs binaires ainsi calculées sur un seul mot.

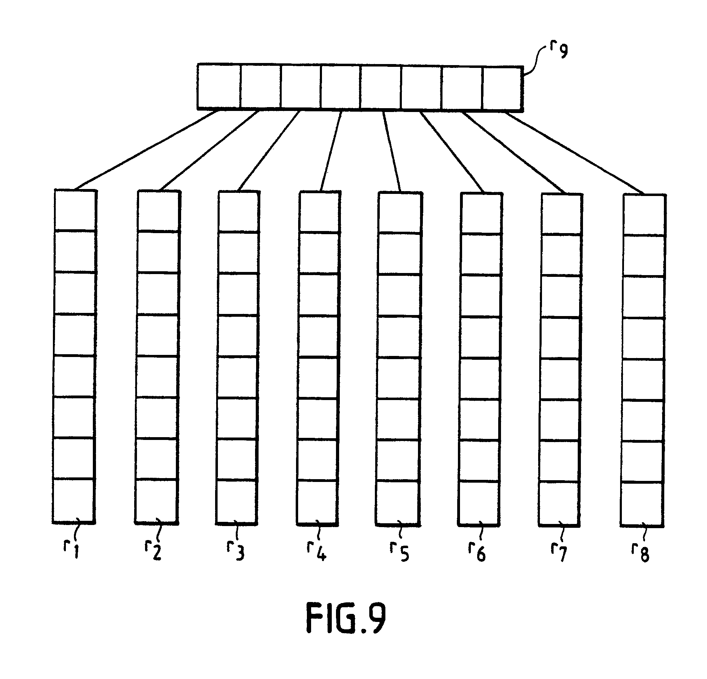

Selon l'invention, il existe un circuit à registres à décalage, illustré figure 9 dans le cas d'un groupe de 8 octets pour accélérer la transposition. Le circuit de la figure 9 comporte huit registres à décalage r1 à r8. La sortie série de chacun de ces registres est reliée à une cellule correspondante d'un registre à décalage r9 à huit cellules. En un seul coup d'horloge les registres à décalage r1 à r8 chargent leurs premiers bits dans le registre r9 et décalent tous leurs autres bits. Au coup d'horloge suivant, le premier octet transposé contenu dans r9 est lu et un nouvel octet transféré est généré dans r9.

L'adaptation des seuils $\Theta$ dans le cas des CNE analogiques à poids binaires, ne peut être effectuée comme avec les CNE numériques. En effet, dans le cas de ces CNE numériques, il est bien connu que le seuil $\Theta_j$ peut être aussi bien représenté par un coefficient $W_{ij}$ si $x_i^\mu = 1$ quel que soit $\mu$, et dans ce cas, l'apprentissage des seuils ne diffère pas de l'apprentissage des autres coefficients. Ce procédé n'est donc pas efficace dans le cas de coefficients binaires, mais il est possible d'intégrer selon la Demande de Brevet français n° 89 03151 un seuil programmable associé à chaque neurone. Dans le cas de l'apprentissage d'un réseau neuronal à 2 couches illustré par la figure 3, il est possible d'utiliser un CNE supplémentaire, CNE4 pour calculer la correction à apporter aux seuils $\Theta 1_j$ et un CNE supplémentaire CNE5 pour calculer la correction à apporter aux seuils $\Theta 2_k$.

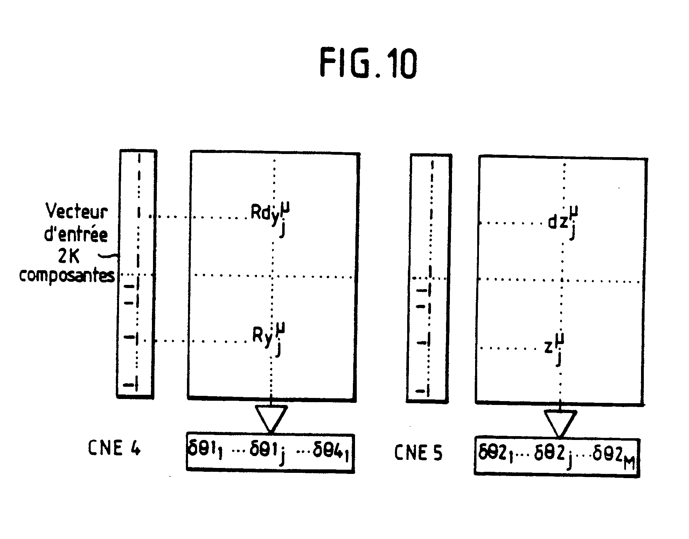

Ceci est illustré sur la figure 10. CNE4 est programmé avec les vecteurs $RDY^\mu$ et $RY^\mu$. Le résultat de l'opération de CNE4 sur un vecteur d'entrée dont la première moitié des composantes sont égales à 1 et la seconde moitié à -1 donne un vecteur d'incréments $\delta$ $\Theta 1_j$, à appliquer aux seuils $\Theta 1_j$. De la même façon, CNE5 est programmé avec les vecteurs $DZ^\mu$ et $Z^\mu$. Le résultat de l'opération de CNE5 sur un vecteur d'entrée dont la première moitié des composantes sont 1 et la seconde moitié -1 donne un vecteur d'incréments $\delta$ $\Theta 2_k$ à appliquer aux seuils $\Theta 2_k$.

Les CNE de corrections CNE2, CNE3, CNE4 et CNE5 sont utilisés selon l'invention à la fois pour effectuer des opérations de calcul et pour stocker des ensembles de vecteurs (résultats intermédiaires) qui sont nécessaires dans le cycle d'apprentissage :

- -CNE2      contient les vecteurs d'entrée $X^\mu$.
- -CNE3      contient les vecteurs intermédiaires $Y^\mu$.
- -CNE4      contient les vecteurs rétropropagés $RDY^\mu$ et $RY^\mu$.
- -CNE5      contient les vecteurs désirés $ZD^\mu$ et $Z^\mu$.

## Revendications

1. Procédé d'apprentissage d'un réseau neuronal à circuits neuronaux électroniques (CNE), caractérisé par le fait qu'il consiste à n'effectuer la correction des coefficients synaptiques à l'aide de circuits neuronaux électroniques supplémentaires (CNE1 à CNE3) que lorsque toute la base d'apprentissage a été présentée à l'entrée du réseau et que tous les vecteurs de sortie ont été calculés par le réseau.

2. Procédé selon la revendication 1, caractérisé par le fait que le calcul des corrections à apporter aux coefficients synaptiques est réalisé selon une procédure dérivée de l'algorithme de rétropropagation.

3. Procédé selon l'une quelconque des revendications 1 ou 2, pour un réseau neuronal comportant n CNE "directs" dans le réseau proprement dit, ce procédé étant mis en oeuvre, pour l'apprentissage des coefficients synaptiques à l'aide de (n-1) CNE supplémentaires pour la rétropropagation et (n) CNE supplémentaires pour le calcul des corrections des coefficients, caractérisé par le fait que le $i^{ème}$ CNE de rétropropagation est programmé avec la matrice de coefficients transposée de la ème matrice de coefficients du $(i+1)^{ème}$ CNE "direct", et que le $i^{ème}$ CNE de correction est programmé avec les transformés des vecteurs de la base d'apprentissage présents à l'entrée du $i^{ème}$ CNE "direct".

4. Réseau neuronal à circuits neuronaux électroniques (CNE) "directs" réalisant des transformations sur les vecteurs (CNE-X,CNE-Y), caractérisé par le fait qu'il comporte des circuits neuronaux électroniques supplémentaires (CNE1 à CNE3) dans son circuit de calcul de corrections de coefficients synaptiques.

5. Réseau selon la revendication 4, comportant n CNE "directs", caractérisé par le fait qu'il comporte (n-1) CNE supplémentaires (CNE1) pour la rétropropagation et au plus n CNE supplémentaires (CNE2 et CNE3) pour le calcul des corrections des coefficients synaptiques.

6. Réseau selon la revendication 4 ou 5, caractérisé par le fait que les CNE supplémentaires sont des CNE numériques.

7. Réseau selon la revendication 4 ou 5, caractérisé par le fait que les CNE supplémentaires sont des CNE analogiques.

8. Réseau selon la revendication 4 ou 5, caractérisé par le fait que les CNE supplémentaires sont des CNE analogiques à poids binaires.

9. Réseau selon l'une des revendications 4 à 8, caractérisé par le fait qu'il comporte, en tant que circuits de transposition, des registres à décalage (figure 9).

10. Réseau selon l'une des revendications 4 à 9, caractérisé par le fait qu'il comporte des CNE supplémentaires (CNE4,CNE5) pour les calculs des corrections de seuils.

# FIG.1

Vecteur
d'entrée X

$x_1$

$x_i$ ............................ $W_{ij}$

$x_N$

W

$A_j$

$A_j = \left( \sum_i W_{ij} X_i \right) + \theta_j$

$y_1$ ......... $y_j = f (A_j)$ ...... $y_M$

Vecteur de Sortie Y

$$f(x) = \frac{2}{1+e^{-X/2}} - 1$$

a

$$f(x) = 1 \quad si \quad x \geqslant 0$$

$$f(x) = -1 \quad si \quad x < 0$$

b

FIG. 2

$$A_j^\mu = \left( \sum_i W_{ij} X_i \right) + \theta 1_j$$

$$y_j^\mu = f(A_i)$$

$$B_k^\mu = \left( \sum_j P_{jk} y_j^\mu \right) + \theta 2_k$$

$$z_k^\mu = f(B_k^\mu)$$

**FIG.3**

$$\text{dif } z_k^\mu = 2 \left[ z d_k^\mu - z_k^\mu \right] . f'(B_k^\mu) \qquad (2)$$

$$\text{dif } y_j^\mu = \left( \sum_k P_{jk} \text{ dif } z_k^\mu \right) f'(A_j^\mu) \qquad (3)$$

$$\left( \Delta W_{ij} \right)^\mu = \lambda \, x_i^\mu \, \text{dif } y_j^\mu \qquad (4)$$

$$\left( \Delta P_{jk} \right)^\mu = \lambda \, y_j^\mu \, \text{dif } z_k^\mu \qquad (5)$$

Vecteur
d'entrée
DIFZ$^\mu$

$difz^\mu_1$

$difz^\mu_k$ · · · · · · $P_{kj}$

$difz^\mu_p$

CNE 1
dimension: P×M

a

$dify^\mu_1$ · · · $dify^\mu_j$ · · · $dify^\mu_M$

Vecteur de sortie
DIFY$^\mu$

Vecteur
d'entrée
DIFY$^\mu$

$dify^1_j$

$dify^\mu_j$ · · · · · · · · · $x^\mu_i$

$dify^K_j$

CNE 2
dimension: K×N

b

$\Delta W_{1j}$ · · · · $\Delta W_{ij}$ · · · · · · $\Delta W_{Nj}$

Vecteur de sortie
$\Delta W_j$

Vecteur
d'entrée
DIFZ$_k$

$difz^1_k$

$difz^\mu_k$ · · · · · $y^\mu_j$

$difz^K_k$

CNE 3
dimension: K×M

FIG.4

$\Delta P_{1k}$ · · · · · $\Delta P_{jk}$ · · · · $\Delta P_{Mk}$

Vecteur de sortie
$\Delta P_k$

$$\text{OP1}$$

Génération de K vecteurs
$\text{DIFZ}^{\mu}$ à P composantes
$$difz_k^{\mu} = z\left(zd_k^{\mu} - z_k^{\mu}\right)f'\left(B_k^{\mu}\right)$$

**OP2**

CNE 1

Génération de K vecteurs
$\text{DIFY}^{\mu}$ à M composantes

**OP3**

Transposition:
M vecteurs à K composantes

**OP6**

Transposition:
P vecteurs à K composantes

**OP4**

CNE 2

Génération de M vecteurs
$\delta W_j$ à N composantes

**OP7**

CNE 3

Génération de P vecteurs
$\delta P_k$ à M composantes

**OP5**

Incrémentation de
[ Wij ]

**OP8**

Incrémentation de
[ $P_{jk}$ ]

# FIG. 5

# FIG. 6

K vecteurs désirés $ZD^\mu$
et K vecteurs de sortie $Z^\mu$ à P composantes

CNE 1
Génération de 2K vecteurs
$RDY^\mu$ et $RY^\mu$ à M composantes

Transposition:
M vecteurs à K composantes

Transposition:
P vecteurs à 2K composantes

CNE 2
Génération de M vecteurs
$\delta Wj$ à N composantes

CNE 3
Génération de P vecteurs
$\delta P_k$ à M composantes

Incrémentation

Incrémentation

FIG.7

# FIG.8

CNE 2

Calcul des incréments

$\delta$ Wij

↓

Incrémentation

de WWij par

$\delta$ Wij

↓

Renouvellement des
coefficients:

Wij = Signe (WWij)

a

CNE 2

Calcul des coefficients

$\delta$ Wij

↓

Tirage au sort des
lignes i à renouveler
avec une probabilité
$P_o$

- prob $(r(i)=1) = P_o$

- prob $(r(i)=-1) = 1-P_o$

↓

Renouvellement des
coefficients:

si $r(i)=1$

Wij = $\delta$ Wij

b

FIG.9

# FIG.10

Vecteur
d'entrée
2K
composantes

$Rdy_j^\mu$

$Ry_j^\mu$

$dz_j^\mu$

$z_j^\mu$

CNE 4

$\delta\theta1_1 \cdots \delta\theta1_j \cdots \delta\theta4_1$

CNE 5

$\delta\theta2_1 \cdots \delta\theta2_j \cdots \delta\theta2_M$

Office européen
des brevets

**RAPPORT DE RECHERCHE
EUROPEENNE**

Numéro de la demande

**EP 90 40 3326**

## DOCUMENTS CONSIDERES COMME PERTINENTS

| Catégorie | Citation du document avec indication, en cas de besoin, des parties pertinentes | Revendication concernée | CLASSEMENT DE LA DEMANDE (Int. Cl.5) |
|---|---|---|---|
| X | PROCEEDINGS OF THE IEEE FIRST INTERNATIONAL CONFERENCE ON NEURAL NETWORKS, San Diego, CA, 21-24 juin 1987, pages II-711-II-718, IEEE, New York, US; K. OKAJIMA et al.: "A heteroassociative memory network with feedback connection"<br>* Figures 2,5; page II-713, ligne 3 - page II-715, ligne 12 * | 4 | G 06<br>F 15/80 |
| Y | IDEM | 1,2 | |
| A | IDEM | 3,5-8 | |
| Y | D.E. RUMELHART et al.: "Parallel distributed processing", vol. 1: "Foundations", 1986, pages 318-362, MIT Press, Cambridge, GB<br>* Page 324, lignes 1-12; page 354, ligne 1 - page 357, ligne 2; page 359, ligne 6 - page 360, ligne 4 * | 1,2 | |
| A | IEEE JOURNAL OF SOLID-STATE CIRCUITS, vol. 24, no. 4, août 1989, pages 1129-1135, IEEE, New York, US; B.W. LEE et al.: "Design of a neurel-based A/D converter using modified Hopfield network"<br>* Figures 4,5 * | 1,4 | |

|  |  |
|---|---|
| DOMAINES TECHNIQUES RECHERCHES (Int. Cl.5) | |
| G 06 F 15 | |

Le présent rapport de recherche a été établi pour toutes les revendications

| Lieu de la recherche | Date d'achèvement de la recherche | Examinateur |
|---|---|---|
| La Haye | 06 mars 91 | SCHENKELS P.F. |

CATEGORIE DES DOCUMENTS CITES

X : particulièrement pertinent à lui seul
Y : particulièrement pertinent en combinaison avec un autre document de la même catégorie
A : arrière-plan technologique
O : divulgation non-écrite
P : document intercalaire
T : théorie ou principe à la base de l'invention

E : document de brevet antérieur, mais publié à la date de dépôt ou après cette date
D : cité dans la demande
L : cité pour d'autres raisons
&: membre de la même famille, document correspondant